# EUROPEAN PATENT SPECIFICATION

(11) **EP 2 573 537 B1**
(45) Date of publication and mention of the grant of the patent: **13.01.2016**
(21) Application number: 12181182.2
(22) Date of filing: 21.08.2012
(51) Int. Cl.: G01M 13/00, G01N 3/56

(54) **Device for traversing of yarn wound-up on the bobbin**
Vorrichtung zum Traversieren von auf einer Spule aufgewickeltem Garn
Dispositif pour faire traverser le fil enroulé sur la bobine

(30) Priority: 21.09.2011 CZ 20110589
(43) Date of publication of application: 27.03.2013
(73) Proprietor: VÚTS, a.s., Liberec XI - Ruzodol I 460 01 Liberec (CZ)
(72) Inventor: Jezek, Jan, 46006 Liberec (CZ); Srámek, Rudolf, 46000 Liberec (CZ)
(74) Representative: Musil, Dobroslav

(56) References cited:
- GB-A- 719 086
- GB-A- 759 091

## Description

### Technical field

The inventions relates to the method for wear detection of textile machines parts by running linear textile material, in particular wear of the heddle eye of the weaving machine by the warp thread, during which linear textile material is unwound from the storage reel, lead in contact with the guide surface of the tested part of the textile machine and is drawn off by the draw-off mechanism.

Next to this the invention relates to the device for wear detection of textile machines parts by running linear textile material, in particular wear of the heddle eye of the weaving machine by the warp thread. The device comprises the storage reel of linear textile material, the tested sample part of the textile machine, which comprises at least the guide surface, and the draw-off mechanism.

### Background art

Linear textile material, e.g. yarn, thread, fibre, rove or strip, which is produced or processed by textile machines, is in contact with the work surface of guide surfaces of parts of textile machines during its movement. For example it can be a pulling funnel or a driving cylinder of yarn draw-off mechanisms, distribution means of winding mechanisms of spin machines, means for yarn distribution unwinding on weaving machines, etc. In particular, shear or fibre friction occurs at points, where the running yarn is in contact with the guide surface and they are shifting each other. In consequence of the friction, work surface of the guide surfaces of parts of the machine becomes worn. It is known that, during movement of a soft element on a hard surface, a serious abrasive wear usually occurs on the hard surface. It concerns not only mutual movement such as of an outer surface of a hardened steel pivot and an inner surface of a bronze bushing of a slide bearing but also a surface of a hardened steel guide pin and yarn running on it.

It seems important to know in advance a lifespan of parts of textile machines combined with a certain type of processed yarn, thread, other linear fibrous material or other linear textile material, e. g. strip. At present, the quality of parts is chosen according to experience of operators and it often happens that, either, accordingly to the processed textile material, a cheap part of lower quality is chosen, which succumbs to wear and tear quickly, and subsequently needs replacement, which involves downtime and higher cost, or a part of quality higher than necessary is chosen, which lasts long time without wear and tear, however, it is expensive and unnecessarily increases cost of operation of the textile machine. This is important especially for textile machines which comprise a large amount of same parts, which come in contact with a moving linear textile material, e. g. weave machines that contain lot of heddles or reeds. For example, glass threads need more durable parts than cotton ones.

Situation, in which cyclic change of speed of mutual movement of the running yarn and the guide surface and a magnitude of the normal force at which the yarn and the guide surface interact happens, is particularly unfavourable. It happens, for example, during leading of warp threads through guide eyes of heddles for creation of a shed of textile machines. For present weaving machines, which work in speed domain of 800 rpm, the frequency of movement of periodically moving parts is higher than 13 Hz. While the mutual speed of surface of the heddle eye and warp thread is zero in the dead centre of the linear reversible movement of the heddle, in the area between the dead centres the heddle is accelerating up to the weaving plane. Behind the weaving plane the heddle is slowing down towards the opposite dead centre, in which the mutual speed of surface of the heddle eye and warp thread is zero again. Additionally, movement of warp threads, caused by the shift of the fabric by the weft pitch, is superposed to the relative movement caused by periodical creation of the shed.

The measure of wear of heddle eyes is known practically only from monitoring of the machine during operation. From the point of view of development of machines and their parts it is the long-term process to monitor and to evaluate the measure of wear of them during operation.

The device for faster determination of wear or durability against damage of the thread by its friction on guide surfaces is known for example from the document FR 2479985 A1. On the one side of the firmly vertically mounted heddle there is freely rotating cylinder arranged with the horizontal axis of rotation, and the eye of the heddle lies on the tangent of the top surface of the cylinder. On the other side of the heddle at the same level there is the crankshaft axe which is parallel to the axis of rotation of the rotating cylinder. One end of the tested thread is fasten on the end of the crank and it is pulled through the eye of the heddle and lead over the surface of the rotating cylinder behind which there is a weight lead by the vertical guidance fasten on the other end of the thread. The crankshaft is driven so the thread is pulled against the force caused by the weight towards the crankshaft and back through the eye of the heddle by the force caused by the weight. When passing through the eye of the heddle in one direction the thread rubs against eyes upper surface and in the opposite direction it rubs against the eyes lower surface. The wear test of the thread is advantageously accelerated by multiple passes of the same section of the thread through the eye of the heddle. However, neither the device, nor the used procedure is usable for the wear test of the heddle. Unlike at the used procedure, the permanently unworn thread of practically constant quality runs through the eye of the heddle during operation of the machine. Furthermore, the tested part of the thread is worn out significantly sooner than it is possible to identify evaluable wear of the eye of the heddle.

Document GB 719086 discloses a system and method for yarn testing. Oscillatory movement of the thread over machine parts under constant tension force of the thread.

The goal of the invention is to design a method and a device to objectively determine wear of the eye of the heddle or a similar part by the chosen specific type of the thread and to do so within the time adequate to demands placed on time needed for the development of the manufacturing technique and/or the product itself, which means within the time shorter than the time adequate to the real operation, or to find combinations of parts of textile machines for the corresponding processed thread.

### Principle of the invention

The goal of the invention is achieved by the method for wear detection of textile machines parts by running linear textile material, the principle of which is in the fact that the linear textile material, in the delimited section of its length between the supply reel and the draw-off mechanism, is periodically deviated from its track over the guide surface of the tested part of the textile machine, and before the point of the contact with the guide surface of the tested part of the textile machine the linear textile material is slowed down, which causes tensile force in it, which is adjusted by changes of speed of drawing-off and/or by a change of the brake force. The advantage of the proposed method lies particularly in the fact that the mutual effect of the tested component, or its part, which is in contact with the running linear textile material, and the running linear textile material corresponds very well to their real mutual effect during operation of the real textile machine.

In the case when the ratios of the mutual contact are the same or very similar during deviation of the part to the one or the other side of its centre position, it is advantageous that during the wear test the linear textile material is deviated between the straight position of its track and the position deviated in one direction relative to its track.

However, in other cases it is advantageous that the linear textile material is deviated between two deviated positions lying on the opposite sides relative to its track.

During the deviation the guide surface of the tested part of the textile machine is moving along the arc in the plane, which the straight section of the track of the linear textile materials lies in. During the deviation, it is advantageous that during the swinging motion of the tested part of the textile machine the angle of wrapping of its rounded guide surface by the linear textile material is kept practically constant.

It is advantageous that the linear textile material is moisturized in the area before the contact with the guide surface of the tested part of the textile machine. The moisturized linear textile material, for example synthetic yarn, significantly increases wear of machine parts, which is the yarn in contact with. Like this the time needed for achieving objective test results can be reduced.

The goal of the invention is also achieved by the device for wear detection of textile machines parts by running linear textile material, the principle of which is the fact that the tested sample part of the textile machine is placed in the deviation mechanism with deviation transversely to the straight track of the linear textile material. The deviation mechanism is coupled with the drive and it is arranged between the supply reel and the pulling mechanism, while the guide surface of the tested sample part of the textile machine is in the permanent contact with the linear textile material. In this way it is allowed that the mutual effect of the guide surface of the tested part and the linear textile material corresponds to the one during operation mode of the real working textile machine.

In the path of the linear textile material, before the deviation mechanism the linear textile material brake mechanism is arranged. Behind the deviation mechanism the linear textile material tension sensor, at least one linear textile material tensioner pulley coupled with the tensioner drive and the linear textile material draw-off mechanism comprising the draw-off drive are arranged. So, appropriate different loads of tested parts are possible to choose, to monitor their intensity and, using pulses of the tension sensor, to keep them steady on the set level. Like this measurement repeatability, among others, is secured.

The output element of the deviation drive is represented by the swing arm. The line of the straight section of the track of the linear textile material lies in the plane of swinging of the swing arm. Arranged like this, it is advantageous that during the swinging motion of the tested part of the textile machine the angle of wrapping of its rounded guide surface by the linear textile material is kept practically constant.

The deviation drive comprises the four joints mechanism, by kinematics of which the necessary mutual position of the tested part and the test linear textile material can be very advantageously achieved.

The brake mechanism comprises at least one adjustable brake and one fixed brake, which allows the effect of the brake mechanism of the device to be precisely set.

From the point of view of device construction, build space and facile adjustment it is advantageous that the adjustable brake is represented by a disk brake and/or a pin brake.

The tensioner drive and the draw-off drive always comprise the individual continuously controlled electric motor. It allows test conditions to be kept on the desired values, mainly linear textile material tension during the testing to be kept optimal or to be changed in a controlled manner.

### Description of the drawing

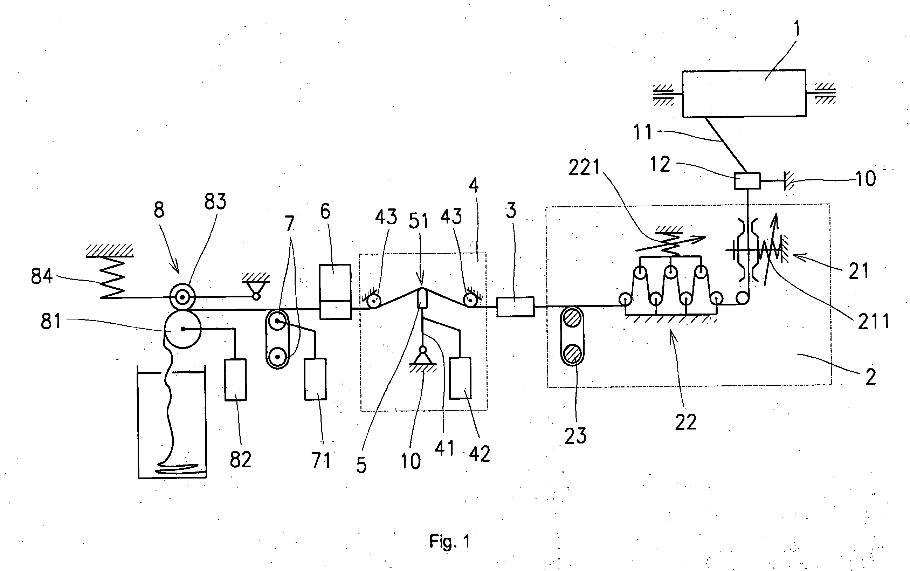

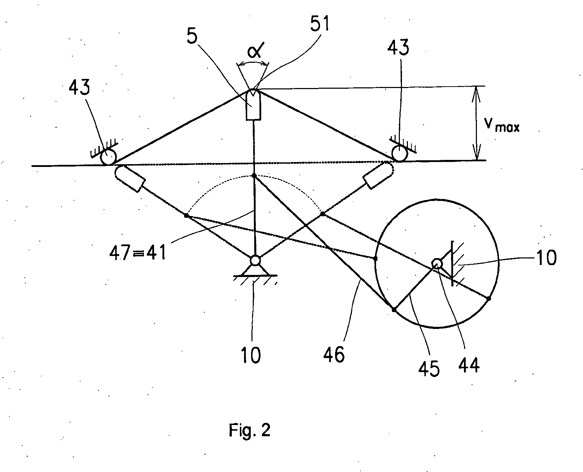

Example of embodiment of the device according to the invention is represented in the drawing, where the Fig. 1 represents the overall schematic of the device and the Fig. 2 represents the schematic of the deviation mechanism.

### Examples of embodiment

Example of embodiment of the device according to the invention is represented in the Fig. 1. Its parts are arranged on the frame **10**, which the supply reel **1** with the test linear textile material **11** (further in the text referred to as the thread **11)** is arranged freely rotatingly in. Behind the reel **1** the thread **11** is lead over the guidance **12**, behind which, in the passive section of the track of the thread **11** containing brake means, the thread **11** brake mechanism **2** is arranged. The brake mechanism **2** contains the known disc brake **21**, the brake force of which is adjustable by initial stretch of the spring **211.** Behind the disk brake **21** a pin brake **22** follows, which is also adjustable by initial stretch of the spring **221.** The function of a coarse brake is performed by the further arranged coarse pin brake **23**. The thread **11** is wound in the coarse pin brake **23** around circumferences of the couple of parallel cylindrical pins, and the effect of the brake is set in advance by the number of coils of the thread on the pins, thus by the total angle of their contact.

Behind the brake mechanism **2** the thread **11** runs through the moisturizing device **3**. Behind it the deviation mechanism **4** of the thread **11** is arranged. The deviation means of the deviation mechanism **4** is represented by the deviation arm **41** by one end of which it is placed swingingly on the frame **10** and it is coupled with the deviation drive **42** (Fig. 2). In the straight path of the thread **11** the workspace of the deviation mechanism **4** is delimited at the beginning and at the end by the supporting thread guidances **43** which fit tightly to the thread **11** from above. The line, which indicates the straight path of the thread **11** before and after the guidances **43**, lies in the plane of swinging of the deviation arm **41.** On the loose end of the deviation arm **41** the tested component **5** (or part of it) of the textile machine is mounted in the way that the test friction surface **51** of the part **5** of the textile machine is turned to the thread **11,** thus, for the example of embodiment, it is directed upward.

The deviation drive **42** is implemented by an unspecified not depicted electric motor. To the coupler on the output shaft **44** of the deviation drive **42** the four joints mechanism is connected, crank **45** of which is connected by a connecting rod **46** with the rocker arm **47**, which makes up the deviation arm **41** of the deviation mechanism **4**.

The deviation arm **41**, relative to the straight path of the thread **11**, is placed in the way that in working range of its swing, the surface of the tested part **5** reaches to the path of the thread **11.** The maximal deviation **vₘₐₓ** of the thread **11** from its undeviated position, which is given by a tangent to the guide surfaces of the guidances **43**, is 4 mm, which means approximately twice as large as amplitude of heddle movement on a real machine. At this magnitude of deviation **vₘₐₓ** the angle α of contact of the friction surface **51** is 10°, which means approximately three times as much as the one possible for a real machine.

Behind the deviation mechanism **4** the tension sensor **6** of the thread is arranged in the path of the thread **11**.

It is followed by the active area of the yarn path, which comprises pulling means. The first part of the means is represented by the couple of the thread **11** tensioner pulleys **7**, one of which is coupled with the drive **71**, which comprises an unspecified not depicted continuously controlled electric motor, and the other of which is placed rotatingly on the frame **10** with frictional resistance to its rotation as low as possible.

Further in the active area of the thread **11** path there is the draw-off mechanism **8**, which comprises the driving drawing roller **81**, coupled with the drive **82**, driving means of which is an unspecified not depicted continuously controlled electric motor. The thread **11** is kept in contact with the drawing roller **81** by the pressure roller **83**, adjustable pressure of which is kept by the spring **84.**

Behind the draw-off mechanism **8** the collecting vessel **9** is placed for collecting of the thread **11** having passed through the test device.

Prior to start of wear detection of the friction surface **51** of the part **5** of the textile machine the thread **11** is put to means of its path and behind the draw-off mechanism **8** the thread **11** is lead to the collecting vessel **9**.

The tested part **5** is mounted on the deviation arm **41** and its friction surface is in the end position of the deviation arm **41**, in close proximity of the undeviated thread **11.** It is advantageous if the tested component is only a part of the real textile machine component, at here, for example, a part of the weaving machine heddle. For the represented embodiment only a bottom part of the eye of the heddle is concerned, profile and length in the direction of the thread **11** path of which is corresponding with the real heddle (for the real machine, the surface of the eye is in contact with the running thread **11** during heddle movement in upper half of stroke, it means above the weaving plane). The friction surface **51** of the tested textile machine part **5** is cylindrically rounded and, for the example of embodiment, its radius of roundness is corresponding with inner roundness of the eye of the real heddle and its wrought surface shows friction coefficient of 0.2.

For the real weaving machine, the heddle movement occurs along the line, which is orthogonal to warp movement. Yet, for the testing device, that kind of movement of the deviation means would cause intolerable large periodical changes of tensile force in the thread **11**, which would not be able to be deformed enough in respect of spatial possibilities of the testing device and consequentially its short length. For the testing device according to the invention, the tested part **5** performs reciprocating motion along an arc in direction of the thread **11** path, which is part of a circle, radius of which is equal to length of the deviation arm **41**. Deviation of the thread **11** from its straight path, measured in a projection, orthogonal to the straight path, corresponds with stroke of the heddle eye of the real machine from the weaving plane to the upper position of the weaving sheet. It is important that, during tested part **5** movement, angle of contact of the friction surface stays practically unchanged, which is desirable with respect to vibrating prevention.

Considering high frequency of its reciprocating motion, it is useful that weight of the sample is as low as possible not to load mechanical means of the deviation mechanism **4** by dynamic forces too much.

The fixed coarse pin brake **23** is put into operation by multiple wrapping of pins circumferences, which secures certain permanent thread **11** braking, proportional to total contact angle of the pins.

After starting the drive **82** of the draw-off mechanism **8** and the drive **71** of the thread **11** tensioner pulley **7** performance of the brake mechanism **2** is adjusted by fine-tuning of the adjustable pin brake **21** so that brake effect of the brake mechanism **2** is overcome by tensile force caused by the drive **82** of the thread **11** draw-off mechanism **8** and the thread **11** is evenly unwound from the supply reel **1.**

Initial stretch of the thread **11,** which is important in respect to drawing-off the thread **11** from the freely rotating supply reel **1,** is set by adjustment of the disk brake **22** of the brake mechanism **2*.*** At the same time, speed of the thread **11** is set to value determined by the minimal speed, at which the thread **11** is not damaged by wearing out, and the maximum speed, above which thread **11** consumption would be unnecessarily high.

It is necessary to draw-off the thread **11** from the driving tensioner pulley **7** by certain minimal tensile force to prevent the thread **11** from getting loose on the circumference of the pulley **7** and to secure sufficient friction between the surface of the pulley **7** and the thread **11.**

Therefore peripheral speed of the drawing roller **81** of the draw-off mechanism **8** is slightly higher than peripheral speed of the tensioner pulley **7.** The adjusted ideal difference of the peripheral speeds secures such elastic lengthening of the thread **11** that the sufficient friction is secured and the maximal tensile force in the thread **11** does not exceed the friction force of the nip line of the drawing rollers **81, 83.** Yet in practice the difference of the peripheral speeds is usually set larger. Then slippage occurs between the thread **11** and the surface of the drawing roller**81**, however, maximal possible tension in the thread **11** at the given pressing force of the pressure roller **83** and the given friction coefficient is secured. Electrostatic charge, resulting from the slippage between drawing roller **81** surface material and thread **11** material, which could cause "sticking" of the thread **11** on surrounding surfaces, is in the example of embodiment neutralized by a not depicted ionizer.

The device makes it possible to load the tested textile machine part **5** as well as the test thread **11** in the way, resembling actual loading of the real machine. Because of the fact that it is desirable to have an unambiguous test result already in a short time of test duration, the test is performed at higher speed of the running thread **11,** at higher frequency of periodical reversible motion of the deviation arm **41** of the deviation device **4,** at higher thread **11** tension, at larger angle α of contact of the friction surface **51** of the tested sample **5** and at larger thread **11** deviation **vₘₐₓ** from its undeviated position. Thread **11** tension is delimited by its high limit of 100 N, thread **11** speed, for the example of embodiment, can be chosen from the range of 5 to 100 mm.s⁻¹.

For speeding the test proceedings up it is also possible to use the thread **11** moisturizing device **3.** Because it is known from practise that moisturized synthetic yarn (on hydraulic weaving machines) significantly increases wear of machine parts, which is the running yarn in contact with.

Simplification of the testing, which can distort test results just minimally, is in the fact that, basically, fibre friction between the thread **11** and the friction surface **51** is evaluated as shear friction on a planar surface. Another insignificant fact from the point of view of the testing is that, considering arrangement of the four joints mechanism, the cycle of deviation arm **41** motion is not fully symmetrical.

It is evident that the drive of the deviation mechanism **4** can be implemented also by other means, for example by effect of an alternating magnetic field. Such a solution is relatively simple and the device would apparently have a long lifetime. The essential drawback resides in uncertain repeatability of motion of the sample under test, because oscillation amplitude highly depends on actual loading of the sample by external forces caused by unbalanced thread tension.

Both precise operation and relative simplicity are advantages of the four joints mechanism, although the example of embodiment can be modified, for example the crank **45** can be replaced by a small eccentricity eccentric shaft. For the presented example, given desired amplitude of the deviation arm **41** and so of the rocker arm **47** of the four joints mechanism, the eccentricity would be 2 mm.

Shortening of wear testing can adequately shorten a new machine parts development process and/or gain knowledge enabling objective evaluation of lifespan of the parts under conditions of real operation mode. Furthermore, it is possible to gain knowledge of lifespan of textile machine parts in combination with a specific type of the processed yarn, thread, other liner fibrous material or other linear textile material, e. g. strip. The gained knowledge enables adaptation of costs of machine parts manufacturing and thus machine purchase cost and, moreover, to lower operation costs related to malfunctions of machines and their forced shutdowns. This is particularly important for textile machines concerning a large number of same working places, and so large production series of same parts.

### List of referential markings

- 1: supply reel of the thread
- 10: frame
- 11: linear textile material (thread)
- 12: thread guidance
- 2: brake mechanism
- 21: plate brake
- 211: spring of the plate brake
- 22: block brake (adjustable)
- 221: spring of the adjustable block brake
- 23: coarse block brake (fixed)
- 3: moisturizing device
- 4: deviation mechanism
- 41: deviation arm (of the deviation mechanism)
- 42: deviation drive
- 43: supporting thread guidance
- 44: output shaft of the electric motor (of the deviation drive)
- 45: crank (of the four joints mechanism)
- 46: connecting rod (of the four joints mechanism)
- 47: rocker arm (of the four joints mechanism)
- 5: tested part of the textile machine
- 51: friction surface of the tested part of the textile machine
- 6: thread tension sensor
- 7: tensioner pulley
- 71: drive of the tensioner pulley
- 8: draw-of mechanism of the thread
- 81: drawing roller
- 82: drive of the drawing roller
- 83: pressure roller (of the draw-of mechanism)
- 84: spring of the pressure roller

## Claims

1. A method for wear detection of textile machines parts by running linear textile material through the textile machine, in particular wear of the heddle eye of the weaving machine, during which linear textile material (11) is unwound from the storage reel (1), lead in contact with the guide surface (51) of the tested part (5) of the textile machine and is drawn-off by the pulling mechanism (8), **characterized by the fact that** the linear textile material, in the delimited section of its length between the supply reel (1) and the draw-off mechanism (8), is periodically deviated from its path over the guide surface (51) of the tested part (5) of the textile machine, and before the point of the contact with the guide surface (51) of the tested part (5) of the textile machine the linear textile material (11) is slowed down, which causes tensile force in it, which is adjusted by changes of speed of drawing-off and/or by a change of the brake force.

2. The method according to the claim 1, **characterized by the fact that** the linear textile material (11) is deviated from the straight position of its path in one direction relative to this path.

3. The method according to the claim 1, **characterized by the fact that** the linear textile material (11) is deviated between two deviated positions lying on the opposite sides relative to its path.

4. The method according to any of foregoing claims, **characterized by the fact that** during the deviation the guide surface (51) of the tested part (5) of the textile machine is moving along the arc in the plane, which the straight section of the path of the linear textile materials (11) lies in.

5. The method according to any of foregoing claims, **characterized by the fact that** the linear textile material (11) is moisturized in the area before the contact with the guide surface (51) of the tested part (5) of the textile machine.

6. A device for wear detection of textile machines parts by running linear textile material through the textile machine, in particular wear of the heddle eye of the weaving machine by the warp thread, containing the storage reel (1) of linear textile material (11), the tested sample part (5) of the textile machine, which comprises at least the guide surface (51), and the draw-off mechanism (8), **characterized by the fact that** the tested sample part (5) of the textile machine is placed in the deviation mechanism (4) with deviation transversely to the straight path of the linear textile material (11), which is coupled with the drive (42) and it is arranged between the supply reel (1) and the draw-off mechanism (8), while the guide surface (51) of the tested sample part (5) of the textile machine is in the permanent contact with the linear textile material (11).

7. The device according to the claim 6, **characterized by the fact that** in the path of the linear textile material (11), before the deviation mechanism (4), the linear textile material (11) brake mechanism (2) is arranged and behind the deviation mechanism (4) the linear textile material (11) tension sensor (6), at least one linear textile material (11) tensioner pulley (7) coupled with the tensioner drive (71) and the linear textile material (11) draw-off mechanism (8), containing the draw-off drive (82), are arranged.

8. The device according to the claim 6 or 7, **characterized by the fact that** the output element of the deviation drive (42) is represented by the deviation arm (41) and the line of the straight section of the path of the linear textile material (11) lies in the plane of swinging of the deviation arm (41).

9. The device according to any of the claims 6 to 8, **characterized by the fact that** the deviation drive (42) comprises the four joints mechanism.

10. The device according to any of the claims 7 to 9, **characterized by the fact that** the brake mechanism (2) comprises at least one adjustable brake (21, 22) and one fixed brake (23).

11. The device according to the claim 10, **characterized by the fact that** the adjustable brake is represented by a disk brake (21) and/or a pin brake (22).

12. The device according to any of the claims 7 to 11, **characterized by the fact that** the tensioner drive (71) and the draw-off drive (82) always comprise the individual continuously controlled electric motor.

## Patentansprüche

1. Verfahren zur Ermittlung des Verschleißes der Bestandteile der Textilmaschinen durch laufendes lineares Textilmaterial durch die Textilmaschine, insbesondere des Verschleißes der Litzenöse einer Webmaschine, bei dem sich das lineare Textilmaterial (11) von der Vorratsspule (1) abwickelt, im Kontakt mit der Führungsoberfläche (51) des geprüften Bestandteiles (5) geführt wird und durch eine Abzugsvorrichtung (8) abgezogen wird, **dadurch gekennzeichnet, dass** das lineare Textilmaterial sich in dem definierten Teil seiner Länge zwischen der Vorratsspule (1) und der Abzugsvorrichtung (8) aus seiner Bahn durch die Führungsoberfläche (51) des geprüften Bestandteiles (5) der Textilmaschine periodisch abweicht, wonach das lineare Textilmaterial (11) vor der Stelle des Kontaktes mit der Führungsoberfläche (51) des geprüften Bestandteiles (5) der Textilmaschine gebremst wird, wodurch darin solche Zugkraft gebildet wird, die durch die Änderungen der Geschwindigkeit des Abzuges und/oder Änderung der Bremskraft korrigiert wird.

2. Verfahren nach dem Anspruch 1, **dadurch gekennzeichnet, dass** das lineare Textilmaterial (11) sich von der direkten Lage seiner Bahn in Bezug auf diese Bahn in einem Sinne abweicht.

3. Verfahren nach dem Anspruch 1, **dadurch gekennzeichnet, dass** das lineare Textilmaterial (11) sich zwischen zwei abgewichenen Lagen abweicht, die in Bezug auf seine Bahn in dem Gegensinn liegen.

4. Verfahren nach einem der vorangehenden Ansprüche, **dadurch gekennzeichnet, dass** sich die Führungsoberfläche (51) des geprüften Bestandteiles (5) der Textilmaschine beim Abweichen im Bogen auf einer Ebene bewegt, in der der direkte Teil der Bahn des linearen Textilmaterials (11) liegt.

5. Verfahren nach einem der vorangehenden Ansprüche, **dadurch gekennzeichnet, dass** das lineare Textilmaterial (11) im Bereich vor dem Kontakt mit der Führungsoberfläche (51) des geprüften Bestandteiles (5) der Textilmaschine angefeuchtet wird.

6. Einrichtung zur Ermittlung des Verschleißes der Bestandteile der Textilmaschinen durch laufendes lineares Textilmaterial durch die Textilmaschine, insbesondere des Verschleißes der Litzenöse der Webmaschine durch einen Kettfaden, die eine Vorratsspule (1) des linearen Textilmaterials (11), geprüfte Probe (5) des Bestandteiles der Textilmaschine, die mindestens eine Führungsoberfläche (51) aufweist, und eine Abzugseinrichtung (8) aufweist, **dadurch gekennzeichnet, dass** die geprüfte Probe des Bestandteiles (5) der Textilmaschine in einer Abweichungseinrichtung (4) mit der Abweichung in der Querrichtung zur direkten Bahn des linearen Textilmaterials (11) gelagert ist, die mit dem Antrieb (42) verkoppelt ist, die zwischen der Vorratsspule (1) und der Abzugseinrichtung (8) angeordnet ist, wobei die Führungsoberfläche (51) der geprüften Probe des Bestandteiles (5) der Textilmaschine in einem permanenten Kontakt mit dem linearen Textilmaterial (11) steht.

7. Einrichtung nach dem Anspruch 6, **dadurch gekennzeichnet, dass** in der Bahn des linearen Textilmaterials (11) vor der Abweichungseinrichtung (4) eine Bremseinrichtung (2) des linearen Textilmaterials (11) angeordnet ist und hinter der Abweichungseinrichtung (4) ein Sensor (6) der Spannung im linearen Textilmaterial (11), mindestens eine Spannrolle (7) des linearen Textilmaterials (11), die mit dem Spannantrieb (71) verkoppelt ist, und eine Abzugseinrichtung (8) des linearen Textilmaterials (11) angeordnet sind, die einen Abzugsantrieb (82) aufweist.

8. Einrichtung nach dem Anspruch 6 oder 7, **dadurch gekennzeichnet, dass** das Ausgangsglied des Abweichungsantriebs (42) ein schwenkbarer Arm (41) ist, wobei die Gerade des direkten Teiles der Bahn des linearen Textilmaterials (11) im Niveau der Schwenkung des schwenkbaren Armes (41) liegt.

9. Einrichtung nach einem der Ansprüche 6 bis 8, **dadurch gekennzeichnet, dass** der Abweichungsantrieb (42) einen Viergelenkmechanismus aufweist.

10. Einrichtung nach einem der Ansprüche 7 bis 9, **dadurch gekennzeichnet, dass** die Bremseinrichtung (2) mindestens eine einstellbare Bremse (21, 22) und eine feste Bremse (23) aufweist.

11. Einrichtung nach dem Anspruch 10, **dadurch gekennzeichnet, dass** die einstellbare Bremse eine Tellerbremse (21) und/oder Zapfenbremse (22) ist.

12. Einrichtung nach einem der Ansprüche 7 bis 11, **dadurch gekennzeichnet, dass** der Spannantrieb (71) und der Abzugsantrieb (82) immer selbstständigen kontinuierlich gesteuerten Elektromotor aufweisen.

## Revendications

1. Procédé de la détection de l'usure des parties composantes des machines à tisser par le matériau textile courant de façon linéaire dans la machine à tisser, surtout l'usure de l'oeillet de la lisse de la machine à tisser par un fil de chaîne, pendant laquelle le matériau linéaire textile (11) se déroule de la bobine de réserve (1), il est mené en contact avec la surface de guidage (51) de la partie examinée (5) et, il est tiré par le mécanisme de décalottage (8), **caractérisé en ce que** le matériau linéaire textile dans la partie déterminée de sa longueur entre la bobine de réserve (1) et le mécanisme de décalottage (8) s'écarte périodiquement de son trajectoire par la surface de guidage (51) de la partie examinée (5) de la machine à tisser, en temps qu'avant le lieu de contact avec la surface de guidage (51) de la partie examinée (5) de la machine à tisser le matériau linéaire textile (11) freine, par le fait duquel se forme sur lui la force de traction qui est corrigée par les changements de la vitesse du décalottage et/ou par le changement de la force de freinage.

2. Procédé suivant la revendication 1, **caractérisé en ce que** le matériau linéaire textile (11) s'écarte de la position directe de son trajectoire dans un sens par rapport à son trajectoire.

3. Procédé suivant la revendication 1, **caractérisé en ce que** le matériau linéaire textile (11) s'écarte entre deux positions écartées placées dans le sens opposé par rapport à son trajectoire.

4. Procédé suivant quelconque des revendications précédentes, **caractérisé en ce que** pendant l'écartement, la surface de guidage (51) de la partie examinée (5) de la machine à tisser se déplace sur l'arc dans le plan, dans lequelle est placée la partie directe du trajectoire du matériau linéaire textile (11).

5. Procédé suivant quelconque des revendications précédentes, **caractérisé en ce que** le matériau linéaire textile (11) dans le domaine avant le contact avec la surface de guidage (51) de la partie examinée (5) de la machine à tisser est humidifié.

6. Dispositif pour la détection de l'usure des parties composantes des machines à tisser par le matériau textile courant de façon linéaire dans la machine à tisser, surtout l'usure de l'oeillet de la lisse de la machine à tisser par un fil de chaîne, comprenant la bobine de réserve (1) du matériau linéaire textile (11), l'échantillon éxaminé (5) de la partie composante de la machine à tisser, comprenant au moins la surface de guidage (51) et le mécanisme de décalottage (8), **caractérisé en ce que** l'échantillon éxaminé (5) de la partie composante de la machine à tisser est placé dans le mécanisme d'écartement (4) avec l'écartement dans le sens transversal au trajectoire directe du matériau linéaire textile (11), accouplé avec la propulsion (42), qui est rangé entre la bobine de réserve (1) et le mécanisme de décalottage (8), en temps que la surface de guidage (51) de l'échantillon éxaminé (5) de la partie composante de la machine à tisser est dans le contact permanent avec le matériau linéaire textile (11).

7. Dispositif suivant la revendication 6, **caractérisé en ce que** dans le trajectoire du matériau linéaire textile (11) est avant le mécanisme d'écartement (4) placé le mécanisme de freinage (2) du matériau linéaire textile (11) et, derrière le mécanisme d'écartement (4) est placé le capteur (6) de la tension dans le matériau linéaire textile (11), au moins une poutrelle tendeuse (7) du matériau linéaire textile (11), accouplée avec la propulsion tendeuse (71) et le mécanisme de décalottage (8) du matériau linéaire textile (11) comprenant la propulsion de décalottage (82).

8. Dispositif suivant 6 ou 7, **caractérisé en ce que** le membre de sortie de la propulsion d'écartement (42) est le bras basculant (41), en temps que la ligne droite de la partie directe de trajectoire du matériau linéaire textile (11), accouplée avec la propulsion tendeuse (71) est placée dans le plan de mouvement pendulaire du bras basculant (41).

9. Dispositif suivant quelconque des revendications de 6 à 8, **caractérisé en ce que** la propulsion d'écartement (42) comprend le mécanisme à quatre articulations.

10. Dispositif suivant quelconque des revendications de 7 à 9, **caractérisé en ce que** le mécanisme de freinage (2) comprend au moins un frein réglable (21, 22) et un frein fixe (23).

11. Dispositif suivant la revendication 10, **caractérisé en ce que** le frein réglable est le frein à disque (21) et/ou le frein à broche (22).

12. Dispositif suivant quelconque des revendications de 7 à 11, **caractérisé en ce que** la propulsion tendeuse (71) et la propulsion de décalottage (82) comprend toujours un électromoteur indépendant avec une commande continue.
